# EUROPEAN PATENT SPECIFICATION

(11) **EP 2 972 535 B1**
(45) Date of publication and mention of the grant of the patent: **18.08.2021**
(21) Application number: 13716491.9
(22) Date of filing: 11.03.2013
(51) Int. Cl.: G02B 6/36, G02B 6/24

(54) **OPTICAL FIBER BEAM DIRECTING SYSTEMS AND APPARATUSES**
GLASFASERSTRAHLLENKSYSTEME UND VORRICHTUNGEN
SYSTÈMES ET APPAREILS DIRIGEANT DES FAISCEAUX DE FIBRES OPTIQUES

(43) Date of publication of application: 20.01.2016
(73) Proprietor: Lightlab Imaging, Inc., Westford, MA 01886 (US)
(72) Inventor: ADLER, Desmond, C., Bedford, MA 01730 (US); PETROFF, Christopher, Groton, MA 01450 (US)
(74) Representative: Purdylucey Intellectual Property
(86) International application number: PCT/US2013/030163
(87) International publication number: WO 2014/142789

(56) References cited:
- EP-A2- 0 188 392
- WO-A1-2013/148758
- US-A1- 2011 181 966
- US-A1- 2011 316 029

## Description

### FIELD OF THE INVENTION

The invention relates generally to the field of optics and more specifically to the field of lenses for use with optical fibers.

### BACKGROUND OF THE INVENTION

Optical analysis methods such as interferometric methods deliver light onto a sample of interest, and further require collection of a portion of the light returned from the sample. Due to the size and complexity of many light sources and light analysis devices, they are typically located remotely from the sample of interest. This is especially apparent when the sample of interest is an internal part of a larger object, such as biological tissue inside of a living organism. One method of optically analyzing internal parts is to guide light from a remote light source onto the sample using a thin optical fiber that is minimally disruptive to the normal function of the sample due to the diminutive cross-section of the optical fiber. An example of such a method is the optical analysis of a luminal organ, such as a blood vessel, using a fiber-optic catheter that is connected on one end to a light source outside of the body while the other end is inserted into the vessel.

A significant barrier to conducting optical analysis of internal regions, such as lumens, is the design and low-cost manufacture of miniature optical devices for focusing or collimating light. Many types of optical analysis, such as imaging and spectroscopy, require that the light incident on the sample be focused at a particular distance or substantially collimated. Since light radiating from the tip of a standard optical fiber will diverge rapidly, a miniature optical system can be coupled to the fiber to provide a focusing or collimating function. Additionally, it is often desirable to analyze a sample location that is not directly in line with the optical axis of the fiber, such as the analysis of the luminal wall of a thin blood vessel. In these situations, a means for substantially altering the direction of the light is used in addition to a means for focusing or collimating the light radiating from the tip of an optical fiber.

Many methods have been previously described for manufacturing miniature optical systems suitable for attachment to an optical fiber that provide some of the functionality described above. These methods generally provide a beam focusing means using one of three methods: 1) using a graded-index (GRIN) fiber segment; 2) directly shaping the fiber tip into a lens; or 3) using a miniature bulk lens. A beam directing means is generally provided using one of four methods: 1) using total internal reflection (TIR) of light from the angled end face of the fiber using an angled, reflective surface; 3) using a miniature bulk mirror; or 4) using a reflective coating on the fiber tip. These methods, however, have numerous inherent limitations, including excessive manufacturing cost, excessive size, or insufficient freedom to select the focal spot size and focal distance.

There are many miniature optical systems known in the art that can be used for analysis of internal luminal structures. Each optical system can be conceptually divided into a beam focusing means and a beam directing means. Light is passed from an external light source to the internal lumen through one or more optical illumination fibers, which may be single mode or multimode in nature. The illumination fiber is in communication with the miniature optical system, which focuses and directs the beam into the luminal wall. Light is returned from the lumen to an analysis apparatus outside the body using the same fiber, or using other fibers co-located with the illumination fiber. In one type of miniature optical system design, the focusing means and directing means are performed by separate optical elements. In another type of design, the focusing means and directing means are performed by the same element.

Several features of existing optical systems are undesirable. For example, in some devices all of the optical elements must be of a diameter similar to the optical fiber (the diameter often being similar to 125 µm) in order to minimize the overall system size. This greatly reduces the options available for selecting the focusing element, beam expander, and beam director and therefore limits the range of focal spot sizes and working distances achievable by the design. Additionally, these extremely small elements are fragile, difficult to handle, and prone to break during manufacturing and operation. Third, in many embodiments an air gap must be provided in order to use TIR for beam redirection. This requires a tight seal to be maintained between the fiber and the other element to maintain the air gap. This can be problematic when the device is immersed in water, blood, or stomach acid, or when the device is rotated or translated at high speed in order to form an image. Fourth, GRIN focusing elements have refractive index profiles that are rotationally symmetric, making it impossible to correct for cylindrical aberrations induced on the beam. The overall effect of these drawbacks is that certain miniature optical systems are expensive, difficult to manufacture, prone to damage, and do not produce a circular output at the focal plane.

Further, other approaches use fusion-spliced fiber segments, in conjunction with thin layers of polymers and epoxies, to form a lens system through a molding process. However, the fabrication of molded lenses incorporating an annular end face and a bore hole are typically problematic. Generally, during injection molding, the bore hole is formed by a thin (135µιη/220µιη) core pin positioned in the mold and supported only on one side of the molding tool. Problems arise, in part, because the core pin may deflect. Such a deflection can occur when pressurized liquid polymer is injected into the mold and exerts force against the core pin. If the force exerted is sufficiently high compared to the stiffness of the core pin, the pin deflects and causes a molding defect in which the bore is irregular or bent at an angle. US Patent Publication No. US 2011/0181966 describes a silicon on insulator lens structure for a medical probe. European Patent Application Publication No. EP 0 188 392 describes an optical fiber alignment and retention device having a cylindrical body, a trench for positioning of an optical fiber and an angled entrance surface of the cylindrical body close to the end of the optical fiber. WO 2013/148758A1 is prior art according to Article 54(3) EPC.

In light of the various challenges identified above and others, a need therefore exists for optical lenses, assemblies, and related methods of manufacture that do not require a core pin during manufacturer. The present invention addresses this need and others.

### SUMMARY OF THE INVENTION

The invention relates to a unitary lens according to claim 1 and a optical coherence tomography probe according to claim 5.

### BRIEF DESCRIPTION OF THE DRAWINGS

The structure and function of the invention can be best understood from the description herein in conjunction with the accompanying figures. The figures are not necessarily to scale, emphasis instead generally being placed upon illustrative principles. The figures are to be considered illustrative in all aspects and are not intended to limit the invention, the scope of which is defined only by the claims.
Fig. 1 is a block diagram of an image data collecting system incorporating a lens in accordance with an illustrative lens embodiment of the invention;
Fig. 2(a) is a perspective diagram of an illustrative lens embodiment of the invention;
Fig. 2(b) is a longitudinal section diagram of the lens of Fig. 2(a);
Fig. 2(c) is a top view diagram of the lens of Fig. 2(a);
Fig. 2(d) is a side view diagram of the lens of Fig. 2(a);
Fig. 2(e) is a back view diagram of the lens of Fig. 2(a);
Fig. 2(f) is a front view diagram of the lens of Fig. 2(a);
Fig. 2(g) is a another perspective view diagram of the lens of Fig. 2(a);
Fig. 3 is photomicrograph of a molded lens in accordance with an illustrative embodiment of the invention;
Fig. 4(a) is an OCT image of the lumen of a vessel taken with a lens;
Fig. 4(b) is an OCT image of the lumen of a vessel taken with a molded lens in accordance with an illustrative embodiment of the invention;
Fig. 5 is a schematic diagram of a mold for constructing a molded lens in accordance with another embodiment the invention;
Fig. 6 is a side longitudinal section view of a molded lens constructed in accordance with the embodiment of the invention shown in Fig. 5;
Fig. 7 is a side longitudinal section view of lens assembly configured to be molded with a marker in accordance with another embodiment the invention;
Fig. 8 is a top longitudinal view of the probe of constructed with the assembly of Fig. 7;
Fig. 9 is a side view of the probe of Fig. 8; and
Fig 10 is a side view of a lens that includes a marker in accordance with another embodiment the invention.

### DETAILED DESCRIPTION

The development of advanced optical analysis or imaging methods such as confocal microscopy, single- and multi-photon fluorescence imaging, harmonic imaging, optical spectroscopy, and optical coherence tomography (OCT) have had a tremendous impact on industrial inspection, fundamental biology studies, and in vivo imaging of animals and humans. Although these methods are dissimilar in many ways, they share a common design feature that the incident light used to illuminate the sample of interest be focused or collimated. Focused light provides many advantages over unfocused light, including improved localization of incident light for obtaining better spatial resolution, and higher optical power density for generating increased signal levels.

A focused or collimated beam is generated by directing the output of a light source through a series of optical elements that together form an optical system. The elements of the optical system are selected to achieve a desired focal spot size, which occurs at a desired distance, referred to as the "working distance," away from the last element in the optical system. Each specific optical analysis application has its own optimal spot size and working distance. Confocal microscopy, for example, requires small spot sizes close to 1 µm. OCT, on the other hand, requires moderate spot sizes of about 5 - about 100 µm.

Although it is possible to obtain a wide range of spot sizes and working distances using optical systems comprised of conventional bulk lenses, many applications require flexible and miniaturized optical systems in order to analyze samples located inside of a larger object. Biomedicine is one example of a field where this requirement is often found. The optical analysis of luminal structures such as the esophagus, intestines, urinary tract, airway, lungs, and blood vessels can use light from an external light source that is transmitted via a flexible probe, focused with a miniature optical system, and returned through the flexible probe to a data analysis system outside the body.

Furthermore, it is often desirable to analyze the luminal wall instead of the contents of the lumen, for example imaging the intima and media of a blood vessel wall using OCT instead of imaging the blood contained in the vessel. This results in an additional design objective of directing the beam away from the longitudinal axis of the optical system or along another preferred direction (or range of directions). These types of optical probes are often referred to as "side-firing," "side-directed," "side-imaging," or "side-looking." The size of these lumens can be as small as several millimeters, such as in blood vessels, making the design of the miniature optical system quite challenging. In addition, the embodiments described herein are also suitable for use with various multi-fiber or fiber bundle embodiments. The various embodiments described below address these needs and others associated with probe components and beam formation.

### Exemplary Optical Fiber Beam Focusing Embodiments

In part, the invention relates to a lens having an elongate three dimensional shape such as a substantially cylindrical solid. The lens defines a trench. The lens and trench defined thereby are sized to receive an optical fiber portion and operatively direct and focus light. The lens can be fixed to an optical fiber and used to both redirect and focus light outside of the optical element and receive light from a sample of interest. In turn, the probe can be used to conduct optical analysis of a luminal structure inside a living body.

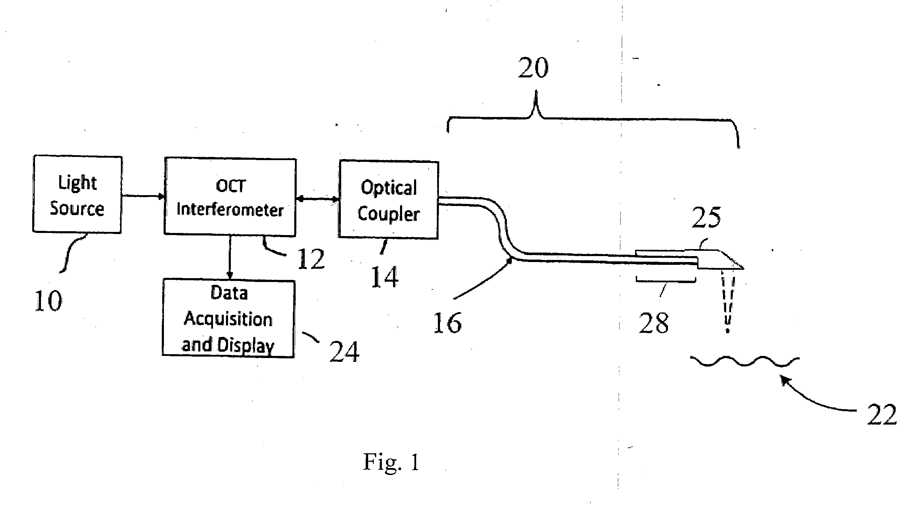

Another embodiment of the invention relates to an optical coherence tomography (OCT) system. An exemplary OCT system is shown in Fig. 1 that includes an exemplary lens according to an embodiment of the invention.

Lens-based assemblies and other beam directing optics can be used in a variety of applications relating to inspection and diagnostics. As shown, in Fig. 1, one application for such lenses and beam directing optics is OCT. OCT imaging catheters incorporate a beam director such as an angled reflector or other beam directing element suitable for directing light onto the interior walls of the coronary arteries. In general, an OCT imaging system includes a light source 10 which transmits light into an interferometer 12, through an optical coupler 14 removably connected to an optical fiber 16. At the end of the fiber 16 is a lens 25 which transmits light from the optical fiber 16 to the vessel 22 under study. The combination of optical fiber 16 and lens 25 is termed the optical probe 20.

Optical probe 20 rotates and thereby illuminates one scan of the wall of the vessel 22 in one revolution. Light reflected from the vessel wall 22 is collected by the lens 25 and passed through the optical fiber 16 to the interferometer 12. The resulting interference pattern is detected and analyzed and the resulting image shown on a display 24. As shown, the lens includes a trench 28 that is sized to receive optical fiber 16. An adhesive is typically disposed in or above trench 28 to secure optical fiber 16 to lens 25.

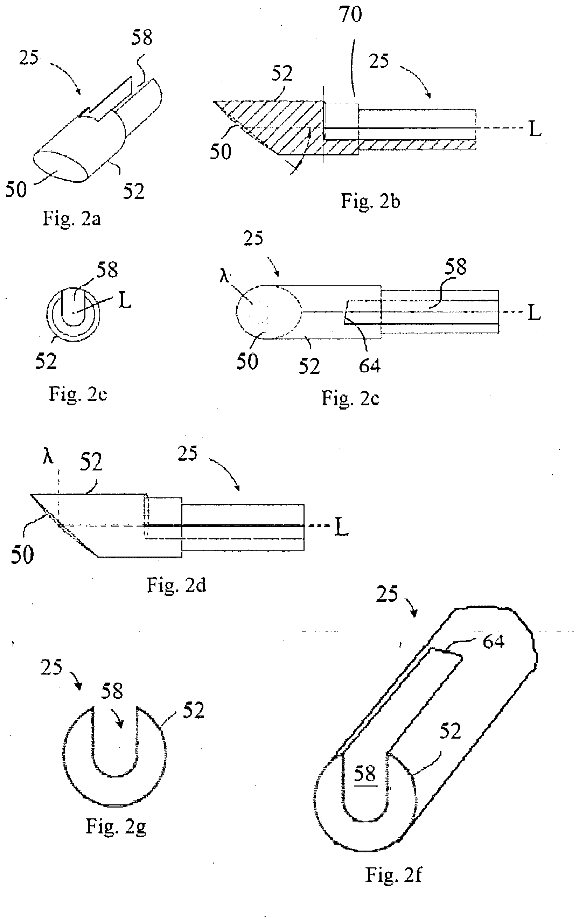

In part, the invention relates to an elongate lens 25, as shown for example, in Figs. 2(a)-2(f) configured to define an outer substantially cylindrical surface 52 having a trench 58 to receive an optical fiber. As a result of the elongate optical element including a trench 58 that allows an optical fiber to be received such as by dropping the fiber in the trench 58 the elongate element avoids the use of a core pin used in the manufacture of prior art lenses and the manufacturing problems associated therewith.

In one embodiment, the optical fiber received in the trench 58 of a given lens embodiment includes an optical fiber end face. The optical fiber disposed in the trench is configured to send and receive optical signals. A light beam exiting the optical fiber endface expands or diverges from the endface. In this way, the lens provides beam directing or focusing in lieu of using a GRIN lens with the optical fiber. Unlike the bore in the lens of the prior art, which is bounded on all sides by the material of which the bore is formed or defined by, the fiber receiving trench 58 has a slit or U-shaped appearance. That is, the trench 58 is partially bounded by two walls of the trench and a bottom of the trench to form a slit or trench region for receiving and bonding an optical fiber to the lens.

The bottom and walls of the trench can be curved or straight or combinations thereof in one embodiment. In one embodiment, the trench defined by the lens has a width that ranges from about 80um to about 300um such that the trench can receive an optical fiber. In one embodiment, the trench defined by the lens has a length that ranges from about 0.2mm to about 3mm such that the fiber can be reliably glued into the trench. The trench defined by the lens has a height selected to position the center of the optical fiber along the longitudinal axis of the lens. The trench is therefore configured to have height that is longer / deeper relative to the width of the trench, such as for example shown the portion of trench boundary. Similarly, in one embodiment, the width of the trench is configured to be narrower than the length of the trench such as shown by the distance between fiber receiving endface and trench boundary portion. The lens is made from a unitary material such as by injection molding.

In more detail, and referring generally to Figs. 2(a)-2(f), the lens 25 includes a beam transmission surface 50 also referred to as a front end or beam directing or beam focusing surface. In Figs. 2(c) and 2(d), λ is shown to indicate regions of light exiting surface 50 as a result of light traveling in the optical fiber in the trench 58 along the longitudinal axis L of the lens 25. The beam transmission surface 50 is a generally flat surface or substantially planar surface that is angled relative to the longitudinal axis of the lens L and reflects and directs light from the optical fiber out through the side of the cylindrical body 52 of the lens 25. In other embodiments, the front end surface 50 is curved to define a lens to focus the light directed through the side of the cylindrical body 52 to a particular working distance. In one embodiment, the beam directing surface 50 can be shaped to include, without limitation, one or more of a biconic asphere, an asphere, a biconic Zernike, a Fresnel, and a non-uniform rational B-spline.

In one embodiment, the diameter of the lens 25 increases at one or more transition cross-sections between the beam directing surface 50 and the trench 58. Providing a step in the diameter allows the lens to be inserted into other components of an imaging catheter, such as a radio-opaque marker band, with a defined portion of the lens extending outside of the other component.

In one embodiment, the center of the trench 58 is concentric with the longitudinal axis L of the cylinder body 52. The cylinder body 52 is a substantially cylindrical solid having an endface 64 at one end and a beam transmission surface 50 at the other as shown in Fig 2(f). Referring specifically to Fig. 2(c), the inner end face 64 of lens that is adjacent the end face of the optical fiber (when installed in the trench) is also angled and highly polished to reduce OCT image artifacts caused by light reflecting back into the fiber. The angle shown between the longitudinal axis L and the straight line aligned with surface 50 in Fig. 2(b) ranges from about 5 degrees to about 25 degrees in one embodiment. The optical fiber selected for inclusion in the trench 58 is also angle-cleaved or angle-polished to reduce back-reflections in one embodiment.

In one embodiment, the optical fiber is secured in the trench 58 using an adhesive. Referring also to Figs. 2(b), (d), (e), (f) and (g), the use of the open channel or trench 58 instead of a bore hole leads to a reduction in air bubble formation when an optical fiber is secured into the trench 58 as shown in Fig. 1. This is because air bubbles naturally vent upwards through the open region of the trench 58 formed in the cylindrical body 52. When gluing the fiber into the molded lens, an adhesive can be used that has a refractive index close to both the optical fiber and the polymer used to fabricate the molded lens. Refractive index mismatches of the adhesive should be avoided or reduced to the extent possible in order to reduce back reflections at optical interfaces of materials of differing refractive indices.

Additionally, since the fiber is inserted into the trench, the lens design allows a catheter to be constructed from a single contiguous piece of optical fiber with a contiguous, intact layer of protective polyimide coating. The use of a fiber without stripped regions or fusion splices maximizes the overall strength of the assembly and minimizes the likelihood of breakage.

In more detail, the trench is sized to receive a single mode optical fiber with a protective coating, such as polyimide, typically with a total coated optical fiber diameter of about 105um to about 155µm. Because the trench 58 extends along a surface of the lens, the trench 58 can be formed by a solid fin of tool metal rather than a core pin for forming a bore as used in the prior art. In one embodiment, the solid fin is unitary with the rest of the tool metal that forms the top half of the molded lens. The trench forming fin is much stronger than a core pin and supported throughout its length and so does not deflect. This eliminates the core pin deflection problem described above.

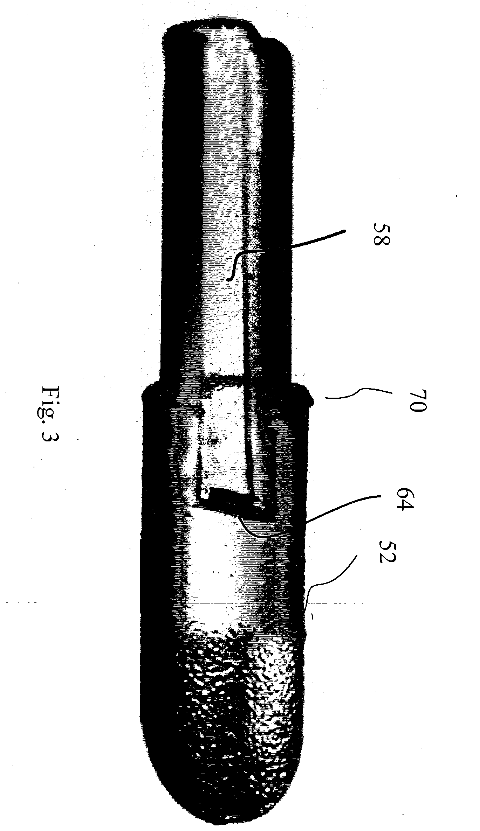

A photomicrograph of the molded lens, taken perpendicular to the trench, is shown in Fig. 3. The trench 58 is shown as formed in cylindrical body 52. In between the first section of the lens, which has a first cross-sectional diameter, the lens has a transitional region 70, in which the first cross-sectional diameter steps up to a second cross-sectional diameter that includes a subset of the trench 58. This transitional region or cross-section 70 is also shown in Fig. 2(b). In one embodiment, the first cross-sectional diameter of the lens ranges from about 150um to about 800um. In one embodiment, the second cross-sectional diameter of the lens ranges from about 300um to about 1000um.

Additionally, in one embodiment, the end face 64 of the lens as shown in Fig. 3(c), is adjacent the trench 58 in order to reduce optical back-reflections. The inner endface 64 is angled relative to the longitudinal axis of the lens and polished to reduce back-reflection. This is significant because OCT systems are sensitive to back-reflections as low as - 100dB (one part in 10⁻¹⁰) to -120dB (one part in 10⁻¹²). To achieve this level of back reflection, the end face 64 is angled at between about 5 degrees and about 25 degrees and the end face highly polished to a surface roughness of less than 30nm. The combination of angling and polishing the end face 64 reduces optical back reflections to an acceptable level. In addition, the end face of the optical fiber itself is either angle-cleaved or angle-polished at between 5 degrees and 25 degrees to prevent back-reflections from the end of the fiber.

The manufacturing process can be further simplified by directly angle-cleaving the fiber through the protective polyimide coating rather than mechanically polishing the fiber. Direct angle-cleaving has the additional benefit of allowing the entire catheter to be constructed of a single contiguous piece of fiber with a contiguous layer of protective polyimide coating (that is, without stripped regions or fusion splices). Maintaining the integrity of the fiber and coating throughout the catheter maximizes strength and reduces the likelihood of breakages.

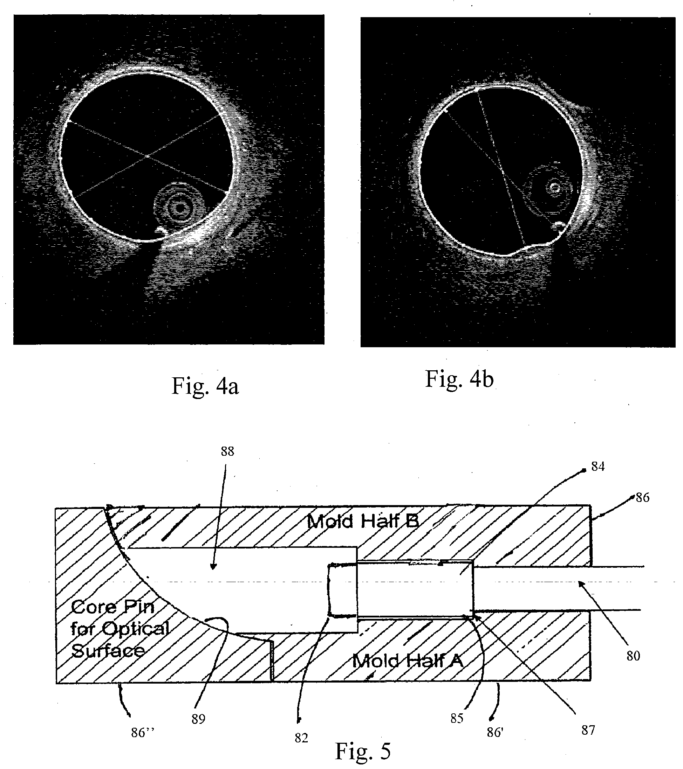

The imaging performance of lenses described herein have been evaluated in an animal study. Image quality was compared to a conventional lens design that used graded index optical fiber segments for beam focusing and a total-internal-reflection air-glass interface for beam direction. Sample images are shown in Figs. 4(a) and 4(b). The photomicrograph (Fig. 4(a)) shows a display of an OCT image of a vessel taken with a conventional lens design. Fig. 4(b) shows a display of an OCT image of a vessel taken with an elongate molded lens cap having an annular endface and a trench and avoids using a core pin during manufacture. As is clear from the image on the right (Fig. 4(b)), the resultant image is brighter with increased resolution with regard to subsurface details such as the dark regions shown in the top quarter of Fig. 4(b).

Referring to Fig. 5 a molded lens is constructed by first inserting an optical fiber 80 into a metal tube 84. One end 82 of the optical fiber 80 is positioned so that it extends through and slightly beyond one end of the metal tube 84. This combination of optical fiber and metal tube is glued together with adhesive 85 and then placed into a mold assembly 86, 86', 86" (generally 86) which includes a shoulder 87 to keep the combination of metal tube 84 and glued fiber 80 from moving out of the mold 86. The fiber 80 is prevented from pushing back because it is glued to the tube 84. Alternatively the fiber is held in place by a press fit on the mold halves. This eliminates the need for the glue.

In addition, the front portion of the mold assembly 89 is polished to form an optical surface on the lens. In this method, because the fiber 80 is not being held directly by the mold 86, the chance of damaging the fiber 80 is diminished. Further, because the combination of the metal tube 84 plus fiber 80 is stiff, the location at which the plastic is put into the mold 86 can be close to the polished surface 89 and the flow of plastic can be directed towards the metal tube 84. Should the metal tube 84 break, it would not likely travel towards the polished surface 89 in the mold 86 and damage it.

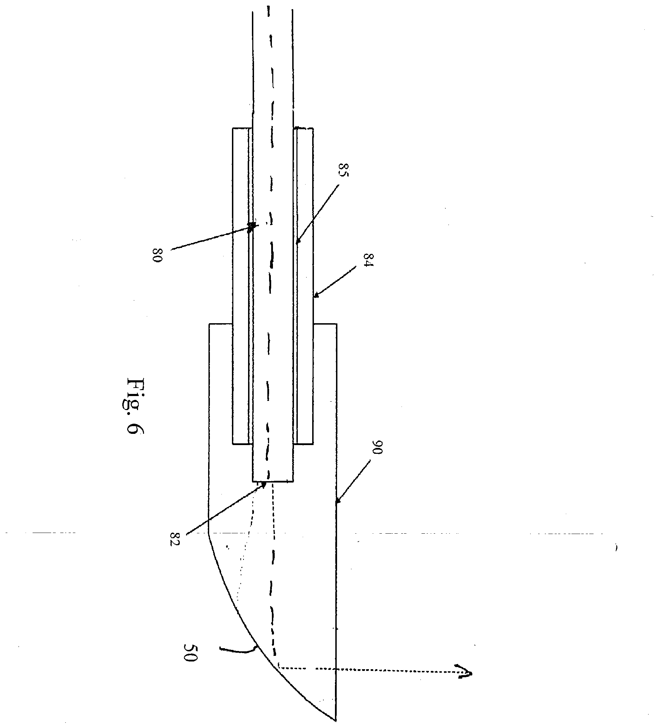

Referring to Fig. 6, the mold 86 is then filled with plastic or other lens material as described previously. Once the lens plastic has solidified the optical fiber 80 and metal tube 84 assembly is removed from the mold 86. The optical fiber 80, metal tube 84 and lens 25 are then made into an OCT probe.

In one embodiment, the optical fiber's outer diameter is about 0.006 inches, the metal tube's inner diameter is about 0.0065 inches, and the metal tube's outer diameter is about 0.0095 inches. The outer diameter of the injection molded plastic lens is about 0.014 inches. The about 0.002 inch wall thickness of plastic around the metal tube is within the fabrication capabilities of micromolding. The metal tube's about 0.0015 inch wall thickness is adequate for providing stiffness over the short length of tubing that is inside the mold.

The metal tube 84 is a structural support that prevents the fiber 80 from breaking at the location at which the fiber 80 exits the molded lens 25. The tendency for the fiber 80 to fracture at this point is caused in part by the large diameter difference between the fiber and the molded lens that results in a large stiffness transition. Further, the molded lens 25 creates hoop stress on the fiber 80 from the contraction of the plastic during the molding. This hoop stress normally imparts additional stress on the fiber 80 where it exits from the mold 86. The metal tube 84 protects the fiber 80 from hoop stress at the proximal fiber exit from the mold 86, 86'.

In addition to protecting the region of the fiber 80 where the fiber 80 exits the mold 86, the metal tube 84 also protects this region of fiber during use. That is, the fiber takes up the tensile load of the rotating fiber image core during fiber image core pullback. Without the metal tube attaching the fiber 80 to the molded lens 25, the region of the fiber 80 for this force transmission is only the length of the fiber 80 that is inserted in the molded lens.

The glue joint 85 between the fiber 80 and the metal tube 84 provides a larger surface area for the tensile load force transmission. In addition, the metal tube 84 provides a stiffness transition from the molded lens 25 to the fiber 80, further reducing the stress on the fiber 80. The use of a smaller fiber, such as 80µm cladding OD, is also practical with this design. This is useful because a smaller fiber will exhibit lower stresses when the assembly is put through a bend in an artery, reducing the likelihood of breakage.

Also importantly, this mold method allows the plastic to encapsulate the end 82 of the fiber face and thus make a good optical junction without glue within the optical path. Since the end 82 of the fiber 80 extends past the metal tube, air is not likely to be trapped at the end of the fiber, which could compromise the optical junction between the optical fiber face and the molded lens. The end of the fiber may be angle cleaved to reduce the back reflection.

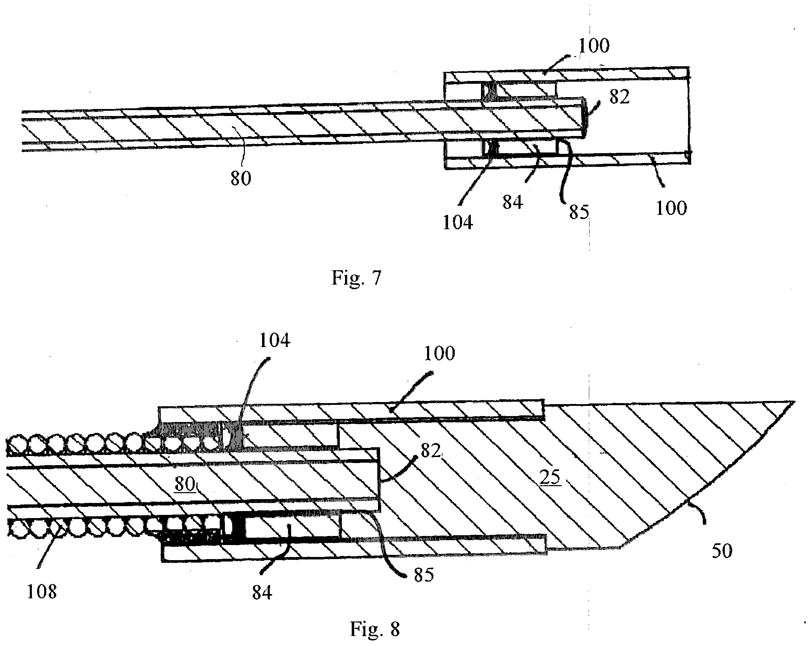

As shown in Fig. 7, the lens 25 is insert molded into a radiopaque marker 100 along with the optical fiber 80. As shown in Fig. 7 the unstripped fiber 80 is angle cleaved, inserted into a short section of tubing 84 and the tubing 84 is inserted into a marker 100. This assembly in pushed against a fixture on the right side of Fig 8 (not shown) to align these components. Glue 104, as shown, attaches the components. As discussed previously this assembly is inserted in the mold. The mold keys onto the ends of the marker 100 to locate it. The mold is then filled with plastic to create the lens.

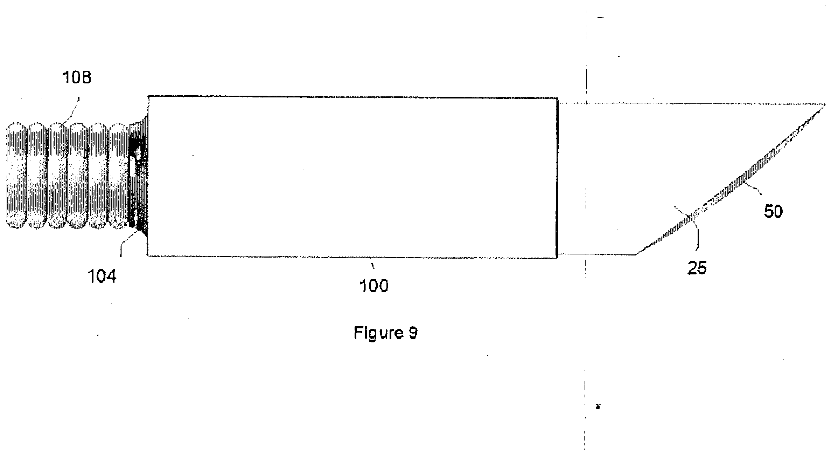

The lens 25 is then reflective coated, and a torque wire 108 or other torsional device is slid inside the marker 100 and glued to the marker 100. This completes the assembly as shown in Fig. 9.

It should be noted that the fiber 80 does not need to extend very far outside the tubing 84 because the primary connection between the fiber 80 and the lens is the marker 100. Only the face of fiber needs to be molded to the lens. By selecting a low melting temperature plastic, the tubing 84 melt bonds to the plastic lens. This helps the strength of the assembly.

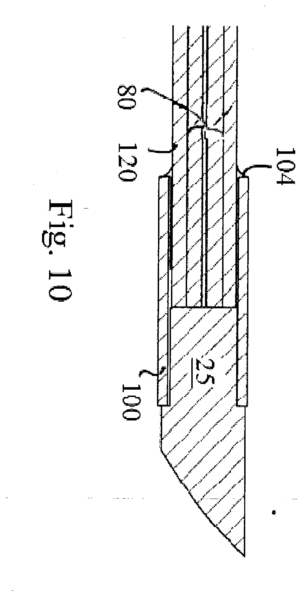

As shown in Fig. 10 the short section of tubing 84 may be eliminated. Instead of a torque wire 108, a very thick coating 120 on the fiber optic glass 80 may be used as the torsional device. In this case the core of the fiber and the coating is simply inserted in the marker 100 and the lens 25 then molded into the marker 100. The assembly is thereby optically aligned during the molding process. This is a repeatable method of alignment. The joint between the marker and the lens is very strong, making this assembly robust. Since the face of the fiber is insert molded onto the lens, the optical path will not be affected by bubbles in the glue. The elimination of the tube 84 therefore can allow for a smaller design overall.

The aspects, embodiments, features, and examples of the invention are to be considered illustrative in all respects and are not intended to limit the invention, the scope of which is defined only by the claims. Other embodiments, modifications, and usages will be apparent to those skilled in the art without departing from the scope of the claimed invention.

## Claims

1. A unitary lens comprising:
a substantially cylindrical body (52) having a longitudinal axis and comprising a first end, an outer cylindrical surface, and a beam directing surface (50) at a second end,
the substantially cylindrical body (52) and the outer cylindrical surface defining an open trench (58) in between the first end and the beam directing surface (50), the substantially cylindrical body (52) defining an inner end face (64),
the beam directing surface (50) being oriented at an angle to the longitudinal axis, and
the open trench (58) being sized to accept an optical fiber, wherein the inner end face (64) is polished and angled relative to the longitudinal axis of the open trench (58), and wherein when an optical fiber is disposed within the open trench (58) an end face of the optical fiber is adjacent the inner end face (64).

2. The unitary lens of claim 1 wherein the beam directing surface (50) is a planar surface angled to direct light received from the optical fiber outside the lens.

3. The unitary lens of claim 1 wherein the beam directing surface (50) defines a non-planar surface positioned to direct light received from the optical fiber such that the light is focused outside of the lens.

4. The unitary lens of claim 1 further comprising an optical fiber (16) secured in the open trench (58) using an adhesive.

5. A rotatable optical coherence tomography probe comprising:
an optical fiber (16) having a first fiber end face adapted to be in communication with a light source (10) and having a second fiber end face and defining a longitudinal axis; and
the unitary lens (25) of claim 1, the open trench (58) being sized to accept the optical fiber (16), wherein the optical fiber (16) is held within the open trench (58) by adhesive.

6. The optical coherence tomography probe of claim 5 wherein the surface of the second end face of the optical fiber (16) is oriented at an angle relative to the longitudinal axis of the optical fiber (16).

7. The optical coherence tomography probe of claim 5 wherein the optical fiber (16) is retained in the open trench (58) using an adhesive having a refractive index matched to the material of the unitary lens (25).

8. The optical coherence tomography probe of claim 5 wherein the beam directing surface (50) is a planar surface angled to reflect light received from the optical fiber (16) through the side of the cylindrical body (52) by reflection.

9. The optical coherence tomography probe of claim 5 wherein the beam directing surface (50) defines a non-planar surface angled to reflect light received from the optical fiber by internal reflection through the side of the cylindrical body (52) and focus that light at a location outside of the cylindrical body (52).

10. The optical coherence tomography probe of claim 5 wherein the unitary lens (25) has a first cross-sectional diameter that ranges from about 150µm to about 800 µm.

11. The optical coherence tomography probe of claim 5 wherein the height of the open trench (58) is longer than the width of the open trench (58).

## Patentansprüche

1. Einheitliche Linse, umfassend:
einen im Wesentlichen zylindrischen Körper (52) mit einer longitudinalen Achse und umfassend ein erstes Ende, eine äußere zylindrische Oberfläche und eine strahlausrichtende Oberfläche (50) an einem zweiten Ende,
wobei der im Wesentlichen zylindrische Körper (52) und die äußere zylindrische Oberfläche eine offene Rinne (58) zwischen dem ersten Ende und der strahlausrichtenden Oberfläche (50) definieren, wobei der im Wesentlichen zylindrische Körper (52) eine innere Endfläche (64) definiert,
wobei die strahlausrichtende Oberfläche (50) unter einem Winkel zur longitudinalen Achse orientiert ist, und
wobei die offene Rinne (58) bemessen ist, eine optische Faser aufzunehmen, wobei die innere Endfläche (64) poliert und unter einem Winkel relativ zur longitudinalen Achse der offenen Rinne (58) orientiert ist, und wobei, wenn eine optische Faser innerhalb der offenen Rinne (58) angeordnet ist, eine Endfläche der optischen Faser an der inneren Endfläche (64) anliegt.

2. Einheitliche Linse nach Anspruch 1, wobei die strahlausrichtende Oberfläche (50) eine ebene Oberfläche ist, die unter einem Winkel orientiert ist, um Licht auszurichten, das von der optischen Faser außerhalb der Linse empfangen wird.

3. Einheitliche Linse nach Anspruch 1, wobei die strahlausrichtende Oberfläche (50) eine nicht-ebene Oberfläche definiert, die positioniert ist, von der optischen Faser empfangenes Licht auszurichten derart, dass das Licht außerhalb der Linse fokussiert wird.

4. Einheitliche Linse nach Anspruch 1, weiterhin umfassend eine optische Faser (16), die in der offenen Rinne (58) mit einem Klebstoff befestigt ist.

5. Rotierbare optische Kohärenztomografie-Sonde, umfassend:
eine optische Faser (16) mit einer ersten Faserendfläche, die adaptiert ist, mit einer Lichtquelle (10) in Kommunikation zu stehen, und mit einer zweiten Faserendfläche und eine longitudinale Achse definierend; und
die einheitliche Linse (25) nach Anspruch 1, wobei die offene Rinne (58) bemessen ist, die optische Faser (16) aufzunehmen, wobei die optische Faser (16) mit Klebstoff innerhalb der offenen Rinne (58) gehalten wird.

6. Optische Kohärenztomografie-Sonde nach Anspruch 5, wobei die Oberfläche der zweiten Endfläche der optischen Faser (16) unter einem Winkel relativ zur longitudinalen Achse der optischen Faser (16) orientiert ist.

7. Optische Kohärenztomografie-Sonde nach Anspruch 5, wobei die optische Faser (16) in der offenen Rinne (58) mithilfe eines Klebstoffs mit einem Brechungsindex, der dem Material der einheitlichen Linse (25) angepasst ist, festgehalten wird.

8. Optische Kohärenztomografie-Sonde nach Anspruch 5, wobei die strahlausrichtende Oberfläche (50) eine ebene Oberfläche ist, die unter einem Winkel orientiert ist, um Licht zu reflektieren, das von der optischen Faser (16) durch die Seite des zylindrischen Körpers (52) durch Reflexion empfangen wird.

9. Optische Kohärenztomografie-Sonde 5, wobei die strahlausrichtende Oberfläche (50) eine nicht-ebene Oberfläche definiert, die unter einem Winkel orientiert ist, um Licht zu reflektieren, das von der optischen Faser über interne Reflexion durch die Seite des zylindrischen Körpers (52) empfangen wird, und das Licht an einem Ort außerhalb des zylindrischen Körpers (52) zu fokussieren.

10. Optische Kohärenztomografie-Sonde nach Anspruch 5, wobei die einheitliche Linse (25) einen ersten Querschnittsdurchmesser im Bereich von ungefähr 150 µm bis ungefähr 800 µm hat.

11. Optische Kohärenztomografie-Sonde nach Anspruch 5, wobei die Höhe der offenen Rinne (58) länger als die Breite der offenen Rinne (58) ist.

## Revendications

1. Lentille unitaire comprenant :
un corps sensiblement cylindrique (52) ayant un axe longitudinal et comprenant une première extrémité, une surface cylindrique externe, et une surface de direction de faisceau (50) à une deuxième extrémité,
le corps sensiblement cylindrique (52) et la surface cylindrique externe définissant une tranchée ouverte (58) entre la première extrémité et la surface de direction de faisceau (50), le corps sensiblement cylindrique (52) définissant une face d'extrémité interne (64),
la surface de direction de faisceau (50) étant orientée selon un angle par rapport à l'axe longitudinal, et
la tranchée ouverte (58) étant dimensionnée pour accepter une fibre optique, où la face d'extrémité interne (64) est polie et inclinée par rapport à l'axe longitudinal de la tranchée ouverte (58), et où lorsqu'une fibre optique est disposée à l'intérieur de la tranchée ouverte (58), une face d'extrémité de la fibre optique est adjacente à la face d'extrémité interne (64).

2. Lentille unitaire selon la revendication 1, où la surface de direction de faisceau (50) est une surface plane inclinée pour diriger la lumière reçue de la fibre optique à l'extérieur de la lentille.

3. Lentille unitaire selon la revendication 1, où la surface de direction de faisceau (50) définit une surface non plane positionnée pour diriger la lumière reçue de la fibre optique de telle sorte que la lumière est focalisée à l'extérieur de la lentille.

4. Lentille unitaire selon la revendication 1, comprenant en outre une fibre optique (16) fixée dans la tranchée ouverte (58) à l'aide d'un adhésif.

5. Sonde rotative de tomographie en cohérence optique comprenant :
une fibre optique (16) ayant une première face d'extrémité de fibre adaptée pour être en communication avec une source de lumière (10) et ayant une deuxième face d'extrémité de fibre et définissant un axe longitudinal ; et
la lentille unitaire (25) selon la revendication 1, la tranchée ouverte (58) étant dimensionnée pour accepter la fibre optique (16), où la fibre optique (16) est maintenue à l'intérieur de la tranchée ouverte (58) par de l'adhésif.

6. Sonde de tomographie en cohérence optique selon la revendication 5, où la surface de la deuxième face d'extrémité de la fibre optique (16) est orientée selon un angle par rapport à l'axe longitudinal de la fibre optique (16).

7. Sonde de tomographie en cohérence optique selon la revendication 5, où la fibre optique (16) est retenue dans la tranchée ouverte (58) à l'aide d'un adhésif ayant un indice de réfraction mis en correspondance avec le matériau de la lentille unitaire (25).

8. Sonde de tomographie en cohérence optique selon la revendication 5, où la surface de direction de faisceau (50) est une surface plane inclinée pour réfléchir la lumière reçue de la fibre optique (16) à travers le côté du corps cylindrique (52) par réflexion.

9. Sonde de tomographie en cohérence optique selon la revendication 5, où la surface de direction de faisceau (50) définit une surface non plane inclinée pour réfléchir la lumière reçue de la fibre optique par réflexion interne à travers le côté du corps cylindrique (52) et focaliser cette lumière à un emplacement à l'extérieur du corps cylindrique (52).

10. Sonde de tomographie en cohérence optique selon la revendication 5, où la lentille unitaire (25) a un premier diamètre de section transversale qui se situe dans une plage allant d'environ 150 µm à environ 800 µm.

11. Sonde de tomographie en cohérence optique selon la revendication 5, où la hauteur de la tranchée ouverte (58) est plus longue que la largeur de la tranchée ouverte (58).
